# EUROPEAN PATENT APPLICATION

(11) **EP 1 216 615 A1**
(43) Date of publication of application: **26.06.2002**
(21) Application number: 00128482.7
(22) Date of filing: 23.12.2000
(51) Int. Cl.: A01N 53/00, A01N 25/18

(54) **Substrate for insect control**

(71) Applicant: Aventis CropScience GmbH, 65929 Frankfurt am Main (DE)
(72) Inventor: Chapple, Dr.Andrew, Charles, 65795 Hattersheim (DE); Briggs, Geoffrey, Gower, ALS5QR Harpenden Herts (GB)

(57) **Abstract**

There is provided a means for controlling insects which consists of a substrate of at least 1000 cm² of freely available evaporative surface which surface carries at least one pyrethroid insecticide, which has an equivalent hydrocarbon (EH) value of 26 or less; which substrate can be folded so that when not in use the freely available evaporative surface containing insecticide exposed to the atmosphere is reduced to less than 5% of the area when in use, and in which the EH value is calculated as the number of carbon atoms plus one for any oxygen linking group, two for chlorine, three for a tertiary nitrogen or a carbonyl group, four for a cyano group or bromine and five for any hydroxy.

## Description

This invention relates to a method of controlling insects and especially alleviating the nuisance and biting problems associated especially with mosquitoes under domestic conditions.

In WO 9632843 there is disclosed an insect control device comprising a substrate impregnated with specified insecticides. In this specification there are described various prior art, and this prior art is incorporated in the present application by reference. The emphasis in this document and many of the other prior art devices is the need for relatively high loading of insecticide in the substrate and/or heating and/or ventilation to provide good insect control.

We have now devised a very simple method of insect control which is highly effective and provides benefits over prior devices.

The invention thus provides a substrate of at least 1000 cm² of freely available evaporative surface which surface carries at least one pyrethroid insecticide, which has an equivalent hydrocarbon (EH) value of 26 or less; which substrate can be folded so that when not in use the freely available evaporative surface containing insecticide exposed to the atmosphere is reduced to less than 5%, preferably less than 2%, especially less than 1% of the area when in use, and in which the EH value is calculated as the number of carbon atoms plus one for any oxygen linking group, two for chlorine, three for a tertiary nitrogen or a carbonyl group, four for a cyano group or bromine and five for any hydroxy group.

The freely available evaporative surface of the substrate is preferably at least 2000 cm², e.g. 5000 cm² to 4 m². and especially 8000 cm². to 2 m².

Examples of suitable pyrethroids include or allethrin or various isomers, such as bioallethrin or bioallethrin S-cyclopentyl isomer (also referred to Esbiol or S-bioallethrin), the last being preferred. Other suitable pyrethroids include transfluthrin.

We have found that a loading of less than 0.1 g per square metre of insecticide will provide good insect control for up to 8 hours in a room having a volume of 25 cubic metres at a temperature of around 25°C and without any forced ventilation or extra heating.

Preferably the loading is from 0.005 to 0.2 g/m², especially 0.01 to 0.08, g/m².

In WO 96/32843, the preferred loading is significantly higher at 1 to 100 g/m². At the same time the maximum size of substrate is only 645 cm². In this specification, moving air is generally provided, usually with some type of fan. With our substrate, no air movement is required so that no form of fan has to be provided. This is particularly useful in those situations where electricity is not easily accessible. Further, when the substrate is folded, it becomes insecticidally inoperative and no insecticide is thus wasted until is again in use.

Suitable substrate materials are for example, very low weight/unit area paper, foil, coated paper or plastic film. By having the insecticide applied to or absorbed into a very thin sheet of the substrate the insecticide can evaporate sufficiently quickly to provide a rapid knockdown of the target insect. The preferred substrate is paper having a density of less than 100 g/m². When the substrate is sheet material the evaporative surface can be on one or both sides of the sheet. In WO 96/32843, the substrate is generally thick material such as card

The substrate containing the insecticide is folded in such a way that when not in use, very little surface containing insecticide is exposed to the atmosphere, but in use is opened up to fully expose the insecticide to the atmosphere. One can imagine various arrangements such as a Spanish fan and compressed paper decorations. The exposed surface can be decorated in a suitable manner so that when attached to the wall or hung from a ceiling or fitting of a room may enhance the décor of the room.

The invention is illustrated in the following examples.

### Example

Various substrates were sprayed with an aerosol formulation of Esbiol to give a loading of from 0.015 to 0.025 g per square metre of the substrate. Each substrate had a surface area from which insecticide could evaporate of approximately one square metre.

The substrates were then hung in a room having a volume of 25 cubic metres. Into the room was introduced 50 female mosquitoes of the species *Aedes aegypti* and the knockdown measured. The results are as follows, where KT₅₀ is the time required in minutes for 50% of the insects to be knocked down.

| Device | Loading | KT₅₀ (mins) |
|---|---|---|
| Paper Christmas decoration | 0.025 g/m² | 30.7 |
| Compressed Paper decoration | 0.025 g/m² | 74.6 |
| Aluminium foil | 0.015 g/m² | 57.6 |

## Claims

1. A substrate of at least 1000 cm² of freely available evaporative surface which surface carries at least one pyrethroid insecticide, which has an equivalent hydrocarbon (EH) value of 26 or less; which substrate can be folded so that when not in use the freely available evaporative surface containing insecticide exposed to the atmosphere is reduced to less than 5% of the area when in use, and in which the EH value is calculated as the number of carbon atoms plus one for any oxygen linking group, two for chlorine, three for a tertiary nitrogen or a carbonyl group, four for a cyano group or bromine and five for any hydroxy.

2. A substrate according to claim 1, wherein there is 0.005 to 0.2 g insecticide per m² of freely available evaporative surface.
